Europäisches Patentamt

European Patent Office

Office européen des brevets

(11) Publication number: **0 072 134**
**A1**

## EUROPEAN PATENT APPLICATION

(21) Application number: **82303909.4**

(22) Date of filing: **23.07.82**

(51) Int. Cl.³: **F 16 H 7/12**

(30) Priority: **03.08.81 US 289626**

(43) Date of publication of application: **16.02.83**
**Bulletin 83/7**

(84) Designated Contracting States: **DE FR GB**

(71) Applicant: **EATON CORPORATION, 100 Erieview Plaza, Cleveland Ohio 44114 (US)**

(72) Inventor: **Heater, Richard William, 15725 17-1/2 Mile Road, Marshall Michigan 49068 (US)**

(74) Representative: **Douglas, John Andrew, Eaton House Staines Road, Hounslow Middlesex TW4 5DX (GB)**

(54) **Drive tensioning device.**

(57) A belt tensioning device (23) is provided for maintaining nominal tension in an endless power transmission belt (11). The tensioning device includes a fixed portion (25), a relatively rotatable portion (27), a biasing spring (29) and a tensioner pulley (31) which engages the belt. The spring biases the rotatable portion and the tensioner pulley against the belt to maintain the nominal belt tension. The fixed portion includes a disk member (65), and the rotatable portion defines an annular chamber (69), concentric with the disk member to define a shear space therebetween. The shear space is filled with viscous fluid, such that movement of the tensioner pulley and rotatable portion generates a viscous shear drag which resists such rotation. The resisting torque is generally a function of the relative velocity of the fixed and rotatable portions, or of the frequency of movement of the rotatable portion. The resisting torque required for any particular engine application may be selected by varying factors such as the shear area defined by the tensioning device, or the viscosity of the fluid in the shear space.

DRIVE TENSIONING DEVICE

BACKGROUND OF THE DISCLOSURE

The present invention relates to drive tensioning systems, and more particularly, to tensioning devices for use with endless power transmission belts.

There has long been a recognized need for a satisfactory tensioning device for use with systems for transmitting power by means of endless, flexible chains and belts. The need to maintain constant tension is especially great for flexible belts, because the occurrence of a slack condition can result in slippage of the belt relative to the drive and driven pulleys, and cause the belt to overheat and be destroyed.

As part of the recent trend toward downsized automobiles, there is a growing trend toward transverse orientation of the vehicle engine. Such an engine orientation reduces the amount of space available at the end of the engine for the placement of engine accessories, as well as the means for driving such accessories. One result of this trend has been the development of accessory drive systems in which the drive pulley, and all of the driven pulleys, are mounted on a common transverse plane, and power is transmitted to each of the driven pulleys by a single, endless power transmission belt. See U.S. Pat. No. 3,951,006.

Such systems, and the belts used therein, are normally referred to by the term "serpentine", derived from the shape of the path which the belt follows. Although the belt tensioner of the present invention may be used with many types of chain and belt drive systems, it is especially advantageous when used with a serpentine belt drive system, and will be described in connection therewith.

The need for an improved tensioning device is especially pronounced in the case of serpentine drive systems in which power is transmitted from the vehicle engine to as many as three or four engine accessories, each of which induces into the belt a particular pattern of impulses and vibrations, superimposed upon the impulses and vibrations generated by the engine.

Conventionally, belt tensioners have included a first member which is fixed relative to the vehicle engine, and a second member which is rotatable relative to the first member. The second member includes an idler pulley, or some other such device which engages the belt and transmits the tensioning force thereto. Ideally, the belt tensioner should operate in such a manner that the tensioner pulley always engages the belt with just the right amount of biasing force to maintain the nominal belt tension, for example, 150 lbs. This is especially difficult in the case of a serpentine system in which the various impulses and vibrations referred to above result in stretching and contracting of the belt, at varying, unpredictable frequencies, and at varying amplitudes.

The simplest form of prior art belt tensioner included merely an arrangement, such as a coil spring, for rotatably biasing the second member relative to the first, in an attempt to maintain a constant bias force of the tensioner pulley against the belt. See, for example, U.S. Pat. No. 3,374,686. It has been found, however, that if the frequency of any of the impulses and vibrations transmitted to the belt nearly matches one of the resonant frequencies of the spring, the spring will permit the tensioner pulley to separate from the belt, in response to outward movement of the belt, resulting in a serious slack condition of the belt.

Accordingly, it is one object of the present invention to provide a tensioning device including means for resisting and dampening impulses and vibrations transmitted by the belt to the tensioner.

A second major type of prior art belt tensioner included an elastomeric mass disposed between the first and second members. See, for example, U.S. Pat. No. 3,975,965. In such tensioners, one portion of the elastomeric mass is attached to the first member, and another portion is attached to the second member. When the tensioner in installed, the first and second members are displaced relative to each other, thus preloading the elastomer, so that the elastomer generates the initial bias against the belt, as well as resisting the impulses and vibrations transmitted by the belt. In theory, such tensioners are generally satisfactory. However, if the elastomer "relaxes", or deteriorates because of heat and aging, not only will its impulse resisting ability be adversely affected, but also, the initial biasing force exerted against the belt, and thus the belt tension, may be substantially altered.

Accordingly, it is an object of the present invention to provide a belt tensioning device which is capable of both generating initial belt tension and resisting impulses and vibrations in a predictable, repeatable manner, over an extended period of time.

A final type of prior art belt tensioner is exemplified by the unit produced commercially by Magna Industries, Inc. in which the first and second members each frictionally engage a relatively thin friction disc, made from a material such as a urethane plastic. It is a major disadvantage of such tensioners that the "static friction" (i.e., initial resistance to rotation of the second member) is relatively higher than the "dynamic friction" (i.e., resistance to rotation of the second member once it has begun to move). In addition, any change in the frictional engagement of the friction disc with either of the adjacent members will substantially alter the impulse and vibration dampening ability of the tensioner.

Accordingly, it is an object of the present invention to provide a belt tensioner having relatively low resistance to movement in a static condition, and a relatively higher resistance to movement in a dynamic condition, or stated differently, the resistance to movement is generally proportional to the frequency or velocity of the movement.

The above and other objects of the invention are accomplished by the provision of an improved belt tensioning device which comprises a first member fixedly mounted relative to the engine and defining a first axis of rotation and a second member mounted for rotation relative to the first member, about the first axis of rotation. The second member includes a radially extending arm portion defining a second axis of rotation. A tensioner pulley is rotatably mounted on the arm portion for rotation about the second axis of rotation, the pulley being adapted to engage the belt. A biasing means includes a first portion seated relative to the first member and a second portion seated relative to the second member to bias the arm portion rotatably, relative to the first member, thereby biasing the tensioner pulley against the belt to create a nominal belt tension. The first and second members define first and second annular surfaces which are closely spaced apart and cooperate to define a shear space therebetween. The shear space is operable, in response to the presence of viscous fluid therein, to generate a viscous shear drag resisting rotation of the second member relative to the first member. The viscous shear drag is generated as a function of the velocity of the rotation of the second member relative to the first member.

BRIEF DESCRIPTION OF THE DRAWINGS

FIG. 1 is an end plan view of a vehicle engine, utilizing a serpentine belt drive system, on which the belt tensioner of the present invention may be utilized.

FIG. 2 is an enlarged plan view, similar to FIG. 1, illustrating the tensioning device of the present invention.

FIG. 3 is a side elevation, taken from the left in FIG. 2, and on the same scale as FIG. 2.

FIG. 4 is an enlarged, transverse cross section, taken on line 4-4 of FIG. 2.

FIG. 5 is a transverse cross section, taken on line 5-5 of FIG. 4, illustrating the stop mechanism of the tensioner.

FIG. 6 is a graph of resisting torque (in in./lbs.) vs. frequency (in hertz) of movement through a known amplitude.

FIG. 7 is an enlarged, fragmentary cross section, similar to FIG. 4, illustrating an alternative embodiment of the invention.

FlG. 8 is a view taken on line 8-8 of FIG. 7, and on the same scale.

DESCRIPTION OF THE PREFERRED EMBODIMENTS

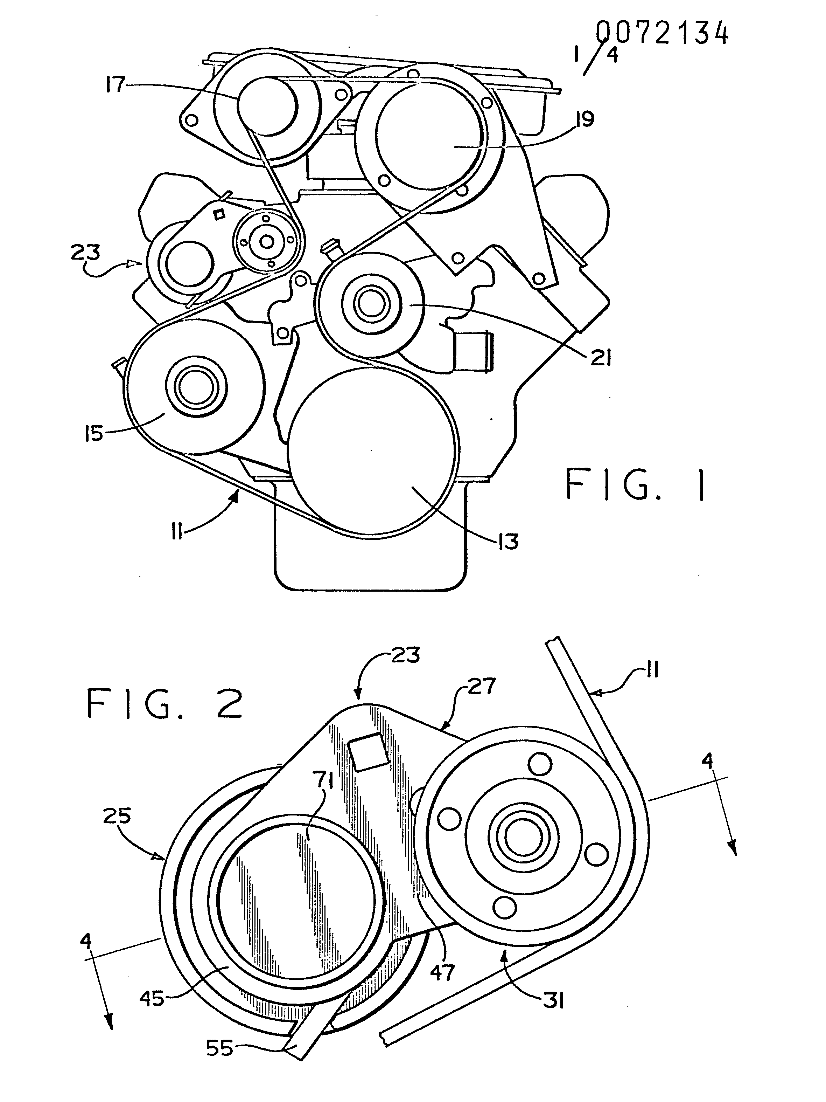

Referring now to the drawings, which are not intended to limit the invention, FIG. 1 illustrates a typical vehicle engine to which the present invention may be applied. Specifically, there is illustrated a V-6 automobile engine utilizing a serpentine belt 11 to transmit power from a crankshaft pulley 13 to a plurality of engine accessories. By way of example only, these accessories are represented by a power steering pump pulley 15, an alternator pulley 17, an air conditioning compressor pulley 19, and a water pump pulley 21. Each of the pulleys 13, 15, 17, 19, and 21 is suitably supported relative to the engine, and each is operatively connected to its associated component such that the belt 11 operates, in the subject embodiment, in a single, vertical plane.

A belt tensioning device, generally designated 23, is disposed between the pulley 15 and the pulley 17 and engages the belt 11 to provide the appropriate wrap-around on the pulleys 15 and 17.

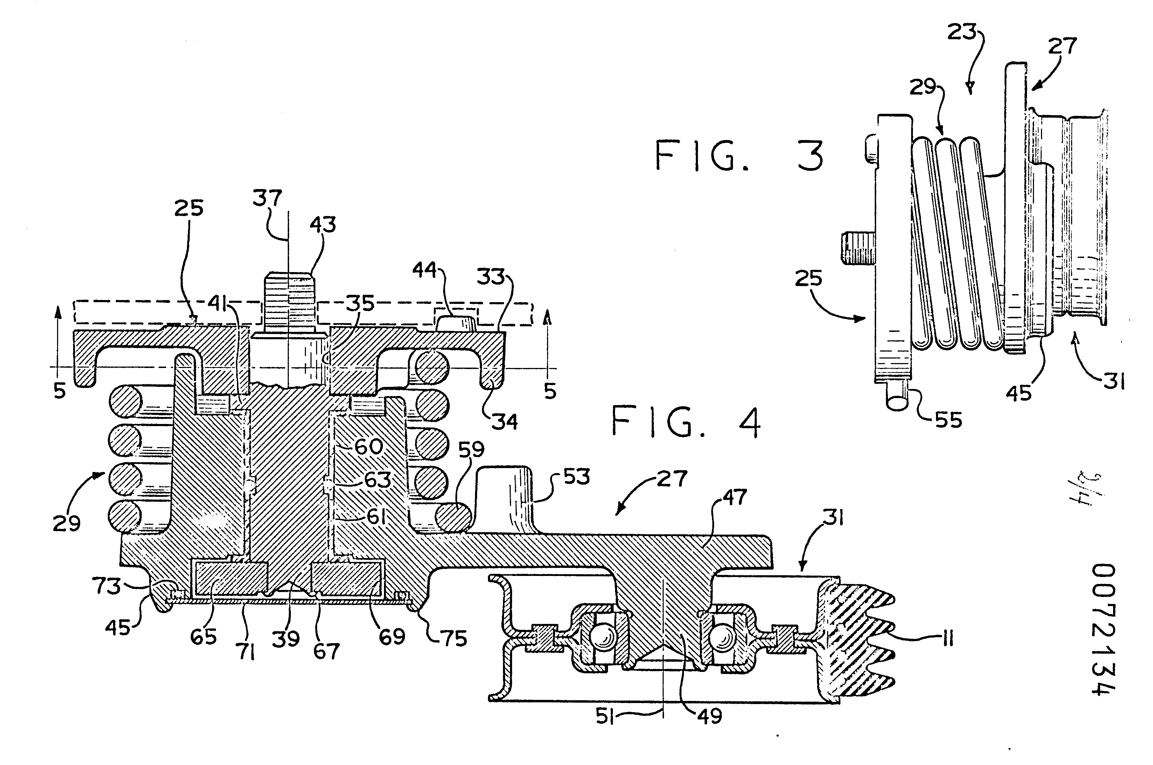

Referring now to FIGS. 2 and 3, it may be seen that the tensioning device 23 includes four major portions: a fixed portion 25; a rotatable portion 27; a biasing spring 29; and a tensioner (or idler) pulley 31.

Referring now primarily to FIG. 4, it may be seen that the fixed portion 25 includes a generally annular plate member 33, including an annular rim 34, and which defines a central opening 35 and an axis of rotation 37. Received within the opening 35 is a shaft member 39, including an integral shoulder portion 41. The shaft member 39 terminates, adjacent the opening 35, in a stud portion 43, which extends through an opening defined by a bracket (shown in dotted lines in FIG. 4) attached to the engine. During assembly, orientation of the tensioning device 23 is achieved by means of a locating boss 44, which is received in another opening defined by the bracket.

The rotatable portion 27 includes a generally cylindrical housing 45, disposed about the shaft member 39. The rotatable portion 27 also includes a radially extending arm portion 47 which, preferably, is formed integrally with the housing 45. The arm portion 47 includes a forwardly-extending (down in FIG. 4), cylindrical boss portion 49 defining an axis of rotation 51. The arm portion 47 also includes a rearwardly-extending stop portion 53, the function of which will be described subsequently.

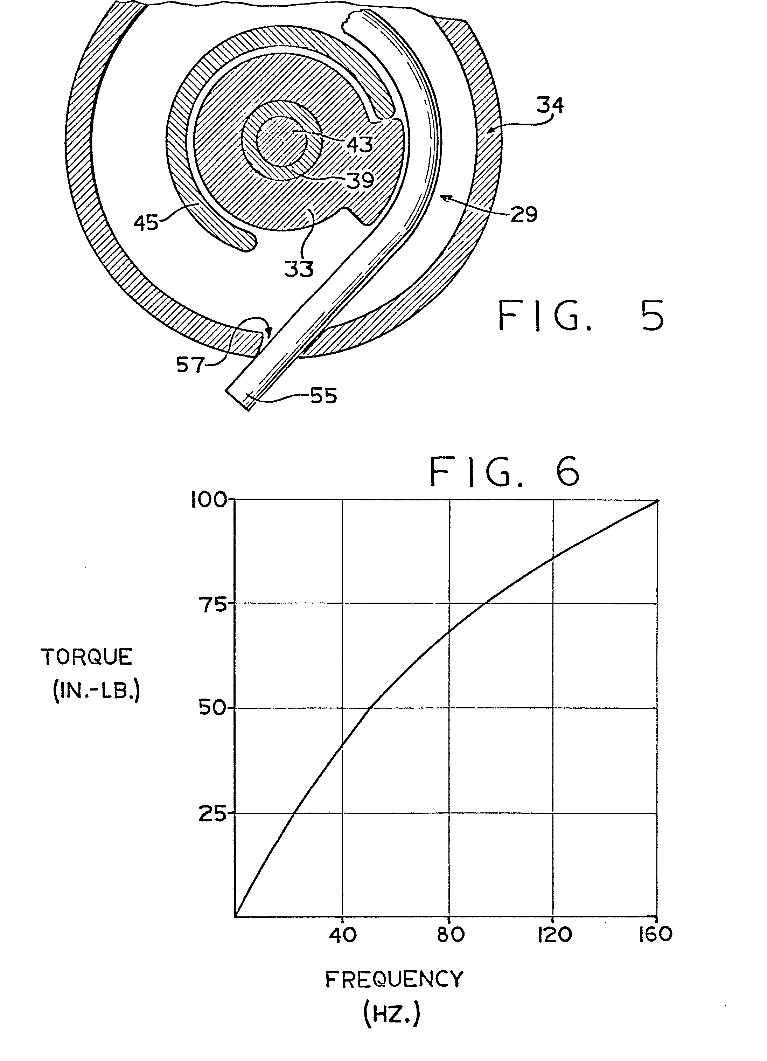

Referring now to FIG. 5, in conjunction with FIG. 4, the biasing spring 29 includes an end portion 55 received in a notch 57 defined by the rim 34. The biasing spring 29 includes another end portion 59, which is seated against the stop portion 53, such that the spring 29 biases the arm portion 47 downward (in FIGS. 1 and 2).

Referring again to FIG. 4, the tensioner pulley 31 is disposed on the boss portion 49 for rotation about the axis 51. It should be noted that the tensioner pulley 31 engages the back side of the belt 11, i.e., the side opposite the V-notches, whereas the pulleys 13, 15, 17, and 19 all engage the side including the V-notches.

Referring still to FIG. 4, it may be seen that a pair of nylon sleeves 60 and 61 are disposed between the OD of the shaft member 39 and the ID of the housing 45. Disposed between the sleeves 59 and 61 is a rubber O-ring 63, seated in a groove formed about the periphery of the shaft member 39. The function of the O-ring 63 will become apparent subsequently. An annular disc-like member 65 is received on the forward end of the shaft member 39, and is fixedly attached thereto, such as by means of a rolled-over portion 67 of the shaft 39.

The housing 45 defines an annular chamber 69 which is concentric with the disc member 65. The chamber 69 is sealed off by means of a cover member 71 and an O-ring seal 73, with the housing 45 including a rolled-over portion 75, to retain the cover member 71, relative to the housing 45. The space between the disk-like member 65 and the annular chamber 69 comprises a shear space which is filled with viscous fluid, preferably, a very high viscosity silicone fluid. When the rotatable portion 27 begins to rotate relative to the fixed portion 25, the presence of viscous fluid in the shear space results in a viscous shear drag, resisting rotation of the portion 27. More specifically, the shear space includes the space between the forward transverse surface of the member 65 and the adjacent surface of the cover 71; the space between the rearward transverse surface of the member 65 and the adjacent, transverse surface of the housing 45; and the space between the outer peripheral surface of the member 65 and the adjacent cylindrical surface defined by the housing 45.

Referring now to FIG. 6, some of the advantageous properties of the present invention will be described in connection with the graph of resisting torque vs. frequency. It should be noted that, because the amplitude of movement of the tensioner pulley 31 is taken to be generally constant, the frequency of movement shown in the graph of FIG. 6 is indicative of the relative rotational velocity between the member 65 and housing 45, and therefore, is also indicative of the shear rate.

The graph of FIG. 6 represents the resisting torque, as a function of frequency, for the tensioning device shown in FIGS. 2-5 and is mathematically derived to indicate resisting torque resulting only from viscous shear drag, based upon known shear properties of silicone fluid. The resisting torque shown in the graph of FIG. 6 does not take into account any resisting torque generated by mechanical friction, such as that resulting from the engagement of the housing 45 and the O-ring seal 63. As is already well known to those skilled in the viscous shear art, the graph of FIG. 6 illustrates that the viscous shear drag, and resulting resisting torque, is generally proportional to the frequency (velocity) of movement of the respective shear surfaces. The particular torque vs. frequency curve shown in FIG. 6 is for fluid having a viscosity of 100,000 centistokes.

Thus, it may be seen from the graph of FIG. 6 that, as the frequency of movement of the tensioner pulley 31 increases, thus increasing the tendency for the pulley 31 to separate from the belt 11, the resisting torque increases proportionately to minimize the chance of such separation. As is well known to those skilled in the viscous shear art, resisting torque is proportional to the frequency (shear velocity), as well as to the fluid viscosity and to shear area. Therefore, it is believed to be within the ability to those skilled in the art to vary one or more of the factors listed above, to achieve the desired resisting torque for any given application.

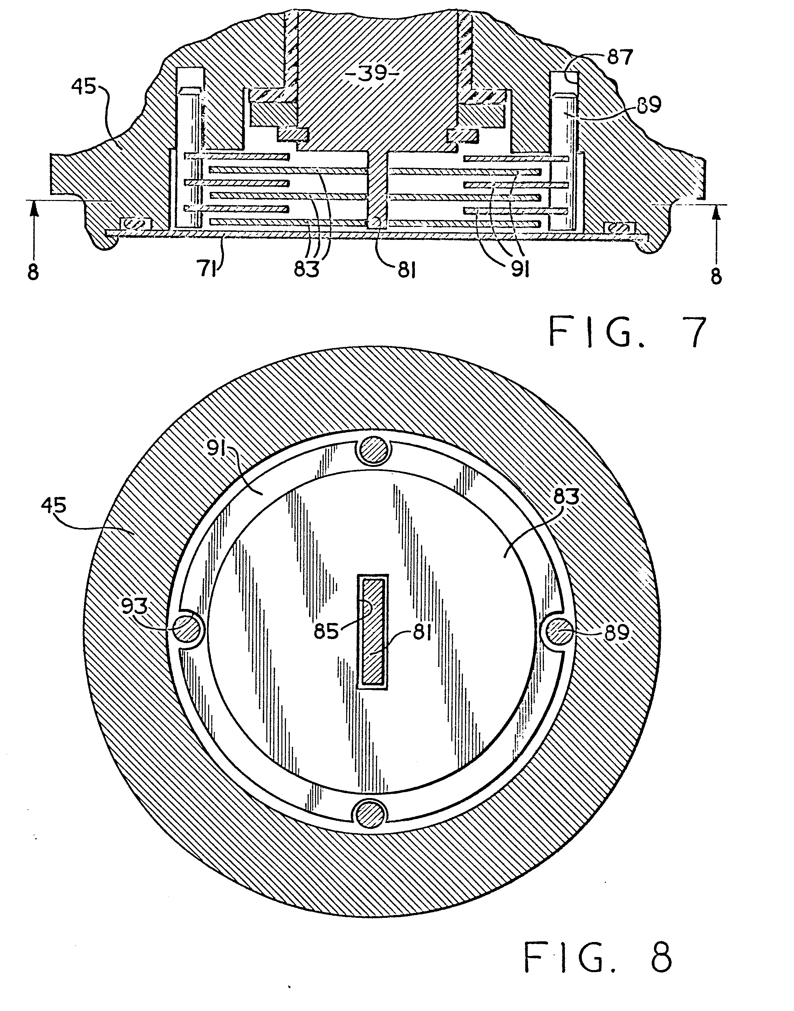

Referring now to FIGS. 7 and 8, there is illustrated an alternative embodiment of the present invention in which the shear area has been substantially increased, thereby making it possible to substantially decrease the fluid viscosity, while achieving the same resisting torque as in the previous embodiment. In the embodiment of FIGS. 7 and 8, like elements bear like numerals, while new or different elements bear numerals in excess of 80.

In this embodiment, the shaft member 39 terminates, at its forward end, in a rectangular projection 81. Disposed about the projection 81 is a plurality of annular plates 83, each of which defines a rectangular opening 85 through which the projection 81 passes. The housing 45 includes a plurality of axial bores 87, and disposed in each bore 87 is a pin 89. A plurality of annular plates 91 is in interleaved relationship with the plates 83, with each plate 91 defining a plurality of semicircular cutouts 93 to receive one of the pins 89 therein. Therefore, the plates 83 are rotatably fixed relative to the shaft 39, whereas the plates 91 are rotatably fixed relative to the housing 45. It should be apparent that the total shear area in the embodiment of FIGS. 7 and 8 is substantially greater than in the embodiment of FIG. 4 because the shear area in FIGS. 7 and 8 includes the total area of overlap of each adjacent pair of plates 83 and 91, as well as the area of overlap between the forward-most plate 83 and the adjacent surface of the cover 71.

It is believed to be within the knowledge of those skilled in the art to make various other alterations and modifications of the invention upon a reading and understanding of the present specification, and it is intended that all such alterations and modifications be included as part of the invention, insofar as they come within the scope of the appended claims.

CLAIMS:

1. A belt tensioning device (23) for use with an engine having a plurality of pulleys (13-21) including a driving pulley and a plurality of driven pulleys (15-21) and an endless power transmission belt (11) operatively associated with the pulleys, said belt tensioning device characterized by:

(a) a first member (25) fixedly mounted relative to the engine and defining a first axis of rotation (37);

(b) a second member (27) mounted for rotation relative to said first member, about said first axis of rotation, said second member including a radially-extending arm portion (47) defining a second axis of rotation (51);

(c) a tensioner pulley (31) rotatably mounted on said arm portion for rotation about said second axis of rotation, said tensioner pulley being adapted to engage the power transmission belt;

(d) biasing means including a first portion (55) seated relative to said first member and a second portion (59) seated relative to said second member to bias said arm portion of said second member rotatably, relative to said first member, thereby biasing said tensioner pulley against the power transmission belt to create a nominal belt tension;

(e) said first and second members defining first and second annular surfaces (65,69), respectively, said first and second surfaces being closely spaced apart and cooperating to define a shear space therebetween;

(f) said shear space being operable, in response to the presence of viscous fluid therein, to generate a viscous shear drag resisting rotation of said second member relative to said first member, said viscous shear drag being generated as a function of the velocity of said rotation of said second member relative to said first member.

2. A belt tensioning device as claimed in claim 1 wherein said first member includes an annular disk-like member (65) defining said first annular surface.

3. A belt tensioning device as claimed in claim 2 wherein said second member includes an annular chamber (69), disposed concentric with said disk-like member, said annular chamber defining said second annular surface.

4. A belt tensioning device as claimed in claim 1 wherein said biasing means consists essentially of a spring member (29), said nominal belt tension resulting solely from said spring member.

0072134

17

19

23

21

15

11

13

FIG. 1

FIG. 2

23

27

11

25

71

4

45

47

31

55

4

**FIG. 3**

27  23  29  31  45  55  25

**FIG. 4**

25  37  43  41  33  44  35  34  5  53  27  47  31  11  49  51  59  60  63  61  75  69  67  39  71  65  45  73  29

FIG. 5

FIG. 6

TORQUE
(IN.-LB.)

FREQUENCY
(HZ.)

FIG. 7

FIG. 8

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | |
| A | US − A − 3 136 170 (J.J. MURRAY) <br> * claim 1; fig. 1 to 4 * <br> −− | 1,4 | F 16 H 7/12 |
| A | DE − C − 359 936 (H. PETERS) <br> * claims 1, 2; fig. 1 to 7 * <br> −− | 1 | |
| A | FR − A − 1 344 080 (SIEMENS SCHUCKERT-WERKE) <br> * abstract; fig. 2, 3 * <br> −− | 1 | **TECHNICAL FIELDS SEARCHED (Int.Cl. ³)** |
| A | DE − A1 − 2 608 277 (F. PORSCHE AG) <br> * claims 1, 2; fig. 2 * <br> −− | 1 | F 16 F 15/16 <br> F 16 H 7/00 |
| A | US − A − 4 270 906 (D.H. KRAFT et al.) <br> −−−− −−−− | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 12-10-1982 | LEMBLE |

EPO Form 1503.1 06.78